Europäisches Patentamt

European Patent Office

Office européen des brevets

(19)

(11) **EP 1 118 943 B1**

(12) **FASCICULE DE BREVET EUROPEEN**

(45) Date de publication et mention
de la délivrance du brevet:
**19.04.2006 Bulletin 2006/16**

(51) Int Cl.:
***G06F 13/42*** *(2006.01)*

(21) Numéro de dépôt: **01400131.7**

(22) Date de dépôt: **17.01.2001**

(54) **Dispositif de régénération d'une horloge à partir d'au moins deux bits de synchronisation**

Schaltung zur Regenerierung von einem Taktsignal aus mindestens zwei Synchronisierungsbits

Circuit for regenerating a clock signal from at least two synchronization bits

(84) Etats contractants désignés:
**DE FR GB IT**

(30) Priorité: **18.01.2000 FR 0000605**

(43) Date de publication de la demande:
**25.07.2001 Bulletin 2001/30**

(73) Titulaire: **STMicroelectronics S.A.**
**92120 Montrouge (FR)**

(72) Inventeur: **Pomet, Alain**
**94230 Cachan (FR)**

(74) Mandataire: **Ballot, Paul Denis Jacques**
**Cabinet Ballot**
**122, rue Edouard Vaillant**
**92593 Levallois Perret Cedex (FR)**

(56) Documents cités:
**EP-A- 0 463 206     EP-A- 0 917 290**
**US-A- 5 638 014**

**Description**

La présente invention concerne un dispositif de régénération d'une horloge.

Elle s'applique plus particulièrement aux dispositifs échangeant des données par un bus série suivant un protocole de type USB (pour *Universal Serial* Bus). Selon ce protocole, l'horloge USB n'est pas transmise sur le bus. Seuls quelques bits de synchronisation sont envoyés en début de transmission, pour permettre aux dispositifs connectés à ce bus de se synchroniser, pour émettre ou recevoir des données, sur ce bus.

Dans des systèmes utilisant un tel protocole de transmission de données, les circuits intégrés comprennent habituellement et de manière tout à fait classique, un circuit de génération d'une horloge synchrone basé sur une boucle à verrouillage de phase et un quartz. Le document US5638014, faisant parti de l'art antérieur, décrit un générateur d'impulsions d'horloge qui est synchronisé par un signal extérieur.

Dans l'invention, on s'intéresse à un système comprenant des supports portables du type carte à puce ou smartcard.

De tels supports portables ne peuvent pas intégrer un circuit de génération d'une horloge synchronisée selon l'état de l'art, car il n'est pas possible d'y intégrer ni le quartz ni la boucle à verrouillage de phase, qui prennent beaucoup trop de place.

L'invention concerne donc un dispositif de régénération de l'horloge du bus, à partir de quelques impulsions de synchronisation externes, au moins deux.

Dans l'exemple d'un bus série USB, la régénération de l'horloge USB doit avoir une grande précision, de l'ordre de 1%.

Selon l'invention, on utilise un oscillateur interne, qui fournit une horloge interne de fréquence. Cette horloge sert de signal de référence pour la régénération de l'horloge USB.

L'idée est de calculer le nombre d'impulsions d'horloge de référence entre les deux premières impulsions de synchronisation envoyées sur le bus USB au début de chaque transaction. On obtient ainsi une mesure grossière de la période de l'horloge USB.

En outre, pour assurer la synchronisation et la précision de l'horloge USB régénérée en interne, on mesure le retard de chacune de ces deux impulsions de synchronisation par rapport à l'impulsion immédiatement précédente de l'horloge de référence. Ce retard est calculé par rapport à une unité de temps, définie en interne. A partir de la mesure de ces deux retards, et de la mesure du nombre de périodes d'horloge de référence, on peut calculer de manière précise la période de l'horloge USB et régénérer cette horloge USB de façon synchrone.

L'invention concerne donc un dispositif de régénération d'une horloge à partir d'au moins deux impulsions de synchronisation transmises sur un bus série externe, dans un circuit intégré comprenant un oscillateur interne apte à fournir un signal d'horloge de référence, caractérisé en ce qu'il comprend des moyens de définition d'une unité de temps et des moyens de mesure associés pour fournir une mesure fine dans ladite unité de temps, du retard des deux impulsions de synchronisation chacune par rapport à une impulsion précédente du signal d'horloge de référence, le dispositif disposant d'une mesure de la période d'horloge de référence dans ladite unité de temps et comprenant en outre des moyens de mesure du nombre de coups d'horloge de référence entre les deux impulsions de synchronisation, lesdites mesures de retard, de la période horloge de référence et du nombre de coup d'horloge étant appliquées comme données de départ à des moyens de calcul aptes à calculer la période correspondante et à initialiser des moyens de décomptage activés à chaque cycle de régénération pour fournir en sortie une impulsion d'horloge régénérée.

D'autres caractéristiques et avantages de l'invention sont détaillés dans la description suivante, présentée à titre indicatif et non limitatif, et en référence aux dessins annexés dans lesquels:

- les figures 1a et 1b illustrent le principe de régénération de l'horloge du bus selon l'invention;
- la figure 2 représente un schéma bloc général d'un dispositif de régénération d'un signal d'horloge synchronisé selon un mode de réalisation de l'invention;
- la figure 3 représente un exemple détaillé d'un circuit de définition et mesure en unité de temps utilisé dans le dispositif selon l'invention;
- la figure 4 représente un exemple de mesure de délai avec le circuit représenté sur la figure 3; et
- la figure 5 est un organigramme d'un exemple de séquencement d'un dispositif selon l'invention.

La présente invention est plus particulièrement décrite dans le cadre d'une application à un circuit intégré assurant des transactions avec d'autres circuits intégrés par un bus série USB, mais son utilisation n'est pas limitée à cette application.

Ce bus se matérialise en pratique par deux lignes différentielles connectées dans chaque circuit intégré à un émetteur et un récepteur.

De façon succincte selon le protocole associé à un tel bus, lorsqu'une transaction est initiée, on a une première phase transitoire pendant laquelle la tension de l'une des lignes différentielles monte, l'autre restant à zéro. Ensuite débute la transaction. Selon le protocole USB, des bits de synchronisation sont d'abord envoyés (par le gestionnaire système du bus qui a reçu une demande de transaction). Ensuite, le circuit initiateur de la transaction transmet ses données.

Sur la figure la, on a représenté un exemple de début de transaction sur un bus série de type USB, avec une phase transitoire et le début de la transaction. Dans l'exemple, on a six impulsions de synchronisation IS1 à IS6, puis une suite de données logiques, DATA, transmise par le circuit intégré qui a initié la transaction.

Dès que le récepteur d'un circuit intégré concerné par la transaction détecte une différence de tension entre les lignes différentielles d+ et d- du bus, 1e circuit intégré engage une procédure d'initialisation de transaction.

Il doit se préparer à recevoir les bits de synchronisation, typiquement 6 pour un bus USB, pour régénérer en interne l'horloge USB qui va lui permettre de recevoir et/ou d'émettre des données.

Selon l'invention, le dispositif de régénération utilise un signal de référence fourni par un oscillateur interne du circuit intégré. Ainsi, la phase d'initialisation suivant la phase de détection d'un début de transaction comporte notamment la mise en route de l'oscillateur interne et la stabilisation de la fréquence du signal d'horloge fournie par l'oscillateur, et qui va servir de signal d'horloge de référence.

Lorsque cette phase d'initialisation est terminée, le dispositif de régénération selon l'invention est prêt. Selon l'invention, il peut régénérer l'horloge du bus à partir des deux premiers bits de synchronisation reçus du bus USB. Les autres impulsions qui sont ensuite reçues peuvent être utilisées pour mettre à jour les données de régénération.

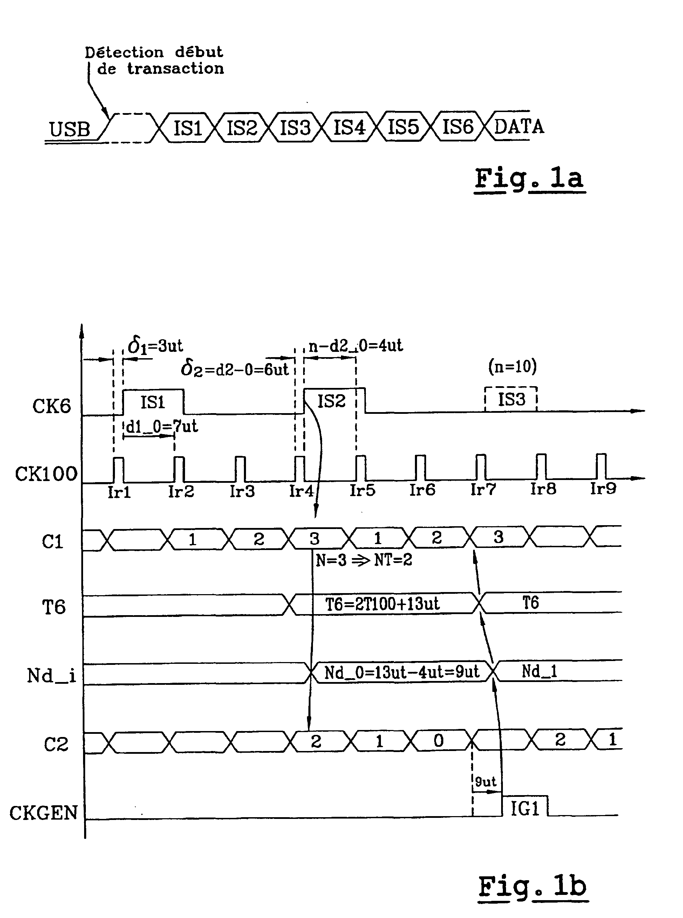

Sur la figure 1b, on a illustré le principe de régénération selon l'invention.

Après remise en forme des signaux reçus des lignes différentielles d+ et d- du bus, on obtient un signal noté CK6. Sur ce signal, on reçoit donc les impulsions de synchronisation, deux dans l'exemple, puis une suite de 0 et de 1 correspondants aux données transmises à la fréquence de l'horloge USB.

Le signal d'horloge de référence de fréquence fournit par l'oscillateur interne est noté CK100. Ces deux signaux CK6 et CK100 ne sont pas synchrones. Dans un exemple pratique, on aura typiquement CK6 = 6 Mhz et CK100 = 100 Mhz.

Entre les deux premières impulsions de synchronisation IS1 et IS2, on peut compter un certain nombre N d'impulsions du signal d'horloge de référence CK100. Dans l'exemple, on compte 3 impulsions, ce qui correspond à un nombre NT = N-1 = 2 de périodes entières du signal d'horloge de référence. Ainsi, en utilisant un simple compteur déclenché (remis à zéro) par la première impulsion de synchronisation IS1 et stoppé par l'impulsion de synchronisation suivante IS2, on sait effectuer une mesure NT de la période T6 de l'horloge du bus par rapport au signal d'horloge de référence CK100.

Cependant, une telle mesure n'est pas précise, tant sur le plan de la période que sur le plan de la synchronisation. Une telle mesure n'est donc pas suffisante à régénérer l'horloge du bus de façon précise.

Aussi, dans l'invention, on utilise des moyens internes de définition d'une unité de temps plus fine, et des moyens de mesure dans cette unité de temps, tel un vernier.

On note IS1 et IS2 les deux premières impulsions de synchronisation reçues, et Ir1, Ir2, Ir3, ..., Iri, la suite des impulsions du signal d'horloge de référence.

On mesure, dans l'unité de temps définie en interne, le retard $\delta1$ de la première impulsion de synchronisation IS1 par rapport à l'impulsion précédente Ir1 du signal d'horloge de référence CK100, et le retard $\delta2$ de la deuxième impulsion de synchronisation IS2 par rapport à l'impulsion précédente Ir4 du signal d'horloge de référence CK100.

Avec ces différentes mesures, à savoir la mesure du nombre N d'impulsions de CK100 et la mesure des retards $\delta1$ et $\delta2$ en unité de mesure fine, on peut obtenir une mesure précise de la période d'horloge externe. On suppose que l'on connaît la mesure de la période d'horloge CK100 dans l'unité de temps de mesure fine. On note : 1 T100=n.ut. Dans un exemple avec CK100=100Mhz, on définit ut=1 ns et donc n=10. Cette valeur n peut par exemple être mémorisée dans une mémoire du circuit intégré.

La période T6 recherchée est donc donnée par :

T6=NT.T100 + n-$\delta1$(ut) + $\delta2$ (ut), comme on peut le voir sur la figure 1.b.

On note d1_0=n-$\delta1$ et d2_0=$\delta2$.

On a alors :

$$T6=NT.T100 + d1\_0(ut) + d2\_0 \ (ut).$$

On est donc capable, par des moyens appropriés, de restituer un signal d'horloge de cette fréquence.

On peut améliorer la précision du dispositif de régénération selon l'invention en prévoyant en outre de mesurer en interne la période du signal d'horloge de référence CK100 dans l'unité de temps ut.

En effet, le signal fourni en sortie d'un oscillateur a en général une fréquence variable d'un circuit intégré à l'autre. Par exemple, pour un oscillateur conçu pour fournir une fréquence de 100 Mhz, on aura en pratique une fréquence dont la valeur est par exemple comprise dans une fenêtre de 80 à 160 Mhz.

Selon l'invention, on prévoit donc un cycle d'apprentissage du signal d'horloge de référence CK100 qui consiste à mesurer en interne le nombre n exprimant sa période en unités de mesure fine ut.

Mais encore faut-il restituer cette horloge du bus de manière synchrone. Pour assurer cette synchronisation selon le principe de l'invention et comme représenté sur la figure 1.b, on part de la deuxième impulsion de synchronisation IS2 pour commencer à compter (ou décompter) la période T6 calculée, pour générer la première impulsion IG1 de l'horloge du bus. En d'autres termes, la deuxième impulsion IS2 sert de top de synchronisation, déclenchant le premier cycle de régénération, et à partir duquel la période T6 calculée va être décomptée.

Supposons que l'on décompte les NT coups d'horloge de référence. Ce décomptage part de la première impulsion Ir5 du signal d'horloge de référence CK100 suivant la deuxième impulsion de synchronisation IS2 (figure 1.b). En réalité, quand on a décompté ces NT coups d'horloge, le délai existant entre la deuxième impulsion de synchronisation IS2 et l'impulsion suivante Ir5 du signal d'horloge de référence CK100 est écoulé et donc implicitement décompté. On peut calculer facilement ce délai écoulé dans l'unité de temps définie en interne : il est égal à n-d2_0, comme représenté sur la figure l.b.

Lorsque l'on a décompté les NT coups d'horloge, il reste donc en réalité à décompter un délai égal à [d1_0 + d2_0 - (n - d2_0)] .ut.

En utilisant des moyens appropriés, on sait décompter ou contrôler l'écoulement d'un tel délai, pour déclencher l'émission d'une impulsion IG1 sur le signal CKGEN de régénération de l'horloge du bus. Cette impulsion est ainsi générée avec une grande précision tant en fréquence qu'en phase (synchronisation).

Chaque cycle de régénération suivant le premier cycle de régénération, est déclenché par l'impulsion CKGEN régénérée par le cycle précédent. Ainsi, l'impulsion IG1 sert de top de synchronisation pour la régénération de l'impulsion IG2 (non représentée). Chaque impulsion régénérée de CKGEN sert donc de top de synchronisation pour le cycle de régénération suivant.

On peut aussi utiliser comme top de synchronisation, une impulsion reçue sur le signal CK6, concurremment à l'impulsion régénérée sur CKGEN. Si on reçoit par exemple l'impulsion IS3 représentée en pointillé sur la figure 1.b, on peut utiliser cette impulsion IS3 comme top de synchronisation ou bien l'impulsion régénérée IG1.

A chaque nouveau cycle de régénération, il faut remettre à jour les données utilisées pour le décomptage de la période T6 à partir du top de synchronisation utilisé (IG1 ou IS3).

Par exemple, pour le deuxième cycle de régénération, si on utilise comme top de synchronisation, l'impulsion régénérée IG1, le nouveau délai d1_1, correspond au délai n-d2_0.

D'une manière générale, si d1_i-1 et d2_i-1 sont les délais utilisés pour la génération de la ième impulsion IGi de l'horloge CKGEN, on a pour la génération de la i+1$^{ieme}$ impulsion IGi+1 :

$$\texttt{d1\_i = n - d2\_i-1.}$$

Le délai d2_i se déduit de d1_i, en remarquant que la période de CK6, donc de CKGEN est constante :

$$\texttt{T6(i)=T6(i-1),}$$

soit :

$$\texttt{NT.T100 + d1\_i-1 + d2\_i-1 = NT.T100 + d1\_i+ d2\_i.}$$

On a donc :

$$\texttt{d2\_i = d1\_i-1 + d2\_i-1 - d1\_i}$$

Dans un perfectionnement de l'invention, on effectue une nouvelle mesure n de la période du signal d'horloge de référence CK100 à chaque cycle de régénération, de manière à suivre les éventuelles variations de fréquence de ce signal, notamment avec la température. On améliore ainsi la précision du dispositif.

Ainsi, pour chaque nouveau cycle de régénération, où les valeurs pour initialiser le décomptage sont recalculées à partir des données du cycle de régénération précédent, on remet à jour la valeur n. Il suffit par exemple de prévoir dans le séquencement, que l'impulsion CK100 suivant l'impulsion prise comme top de synchronisation, déclenche cette mesure de la période de CK100.

D'autres perfectionnements peuvent être apportés, qui améliorent encore la précision du dispositif de régénération.

Précédemment, on a indiqué qu'à chaque cycle de régénération suivant le premier cycle de régénération, on se contente de calculer les nouvelles valeurs à utiliser pour le décomptage de la période T6 à partir du top de synchronisation.

Dans une variante, on prévoit de mettre à jour les valeurs $\delta 1$, $\delta 2$, n, N, permettant de ré-étalonner en permanence le dispositif.

De préférence, on recalcule les valeurs de décomptage à partir des nouvelles mesures acquises pendant le cycle de régénération considéré.

En ce qui concerne la valeur n, on a déjà vu qu'il était possible de lancer une mesure à chaque nouveau cycle de régénération.

Pour remesurer les valeurs $\delta 1$, $\delta 2$ et N, il faut prendre en compte les impulsions de CK6 qui suivent les deux premières impulsions de synchronisation IS1 et IS2 pour lancer les cycles d'acquisition correspondants.

Il faut ici distinguer la mesure de $\delta 1$ des mesures de $\delta 2$ et N. En effet, ces deux dernières mesures ne peuvent se faire qu'à l'occurrence d'une deuxième impulsion de CK6 reçue une période horloge de CK6 suivant une première impulsion de CK6.

Après le premier cycle de régénération, il faut donc distinguer les impulsions de CK6 reçues pour les traiter soit comme la première impulsion de synchronisation IS1 et lancer un premier cycle d'acquisition correspondant, soit comme la deuxième impulsion de synchronisation IS2 et lancer un deuxième cycle d'acquisition correspondant.

Dans la mise en oeuvre de l'invention, on peut alors choisir deux options. Dans une première option, on prend en compte une nouvelle mesure de $\delta 1$ dans le cycle de régénération suivant que si, dans ce cycle suivant, on peut mesurer $\delta 2$ et N, ce qui signifie que l'on reçoit une impulsion qui est en fait une deuxième impulsion au sens de l'invention.

Dans une deuxième option, on prend systématiquement en compte toute nouvelle mesure de $\delta 1$.

Dans tous les cas, à partir du premier cycle de régénération, il faut par exemple mettre à jour un indicateur à chaque réception d'une nouvelle impulsion de CK6, permettant de savoir si cette impulsion doit être traitée comme une première impulsion de synchronisation, pour lancer un premier cycle d'acquisition ou comme une deuxième impulsion de synchronisation pour lancer un deuxième cycle d'acquisition.

Dans un premier cycle d'acquisition, on obtient une nouvelle mesure de $\delta 1$ et on lance la mesure de N.

Si on utilise cette nouvelle mesure de $\delta 1$ pour mettre à jour les données de régénération du cycle en cours, on a d1_i = n-$\delta 1$. Le délai d2_i se déduit de d1_i, par l'égalité suivante :

$$\texttt{T6(i)=T6(i-1),}$$

soit :

$$\texttt{NT.T100 + d1\_i-1 + d2\_i-1 = NT.T100 + d1\_i+ d2\_i.}$$

On a donc :

$$\texttt{d2\_i = d1\_i-1 + d2\_i-1 - d1\_i.}$$

Dans un deuxième cycle d'acquisition, on mesure $\delta 2$ et N. $\delta 1$ a été mesuré au cycle de régénération précédent.

On en déduit, pour le cycle i de régénération en cours, les nouvelles valeurs suivantes :

$$\texttt{d1\_i=n-}\delta 1 \quad ; \quad \texttt{d2\_i = }\delta 2 \texttt{ ; NT=N-1 ; T6 = NT.T100 + d1\_i + d2\_i.}$$

De cette manière on ré-étalonne le dispositif de régénération tout au long d'une transaction avec le bus série, ce qui permet de bénéficier d'une précision optimum.

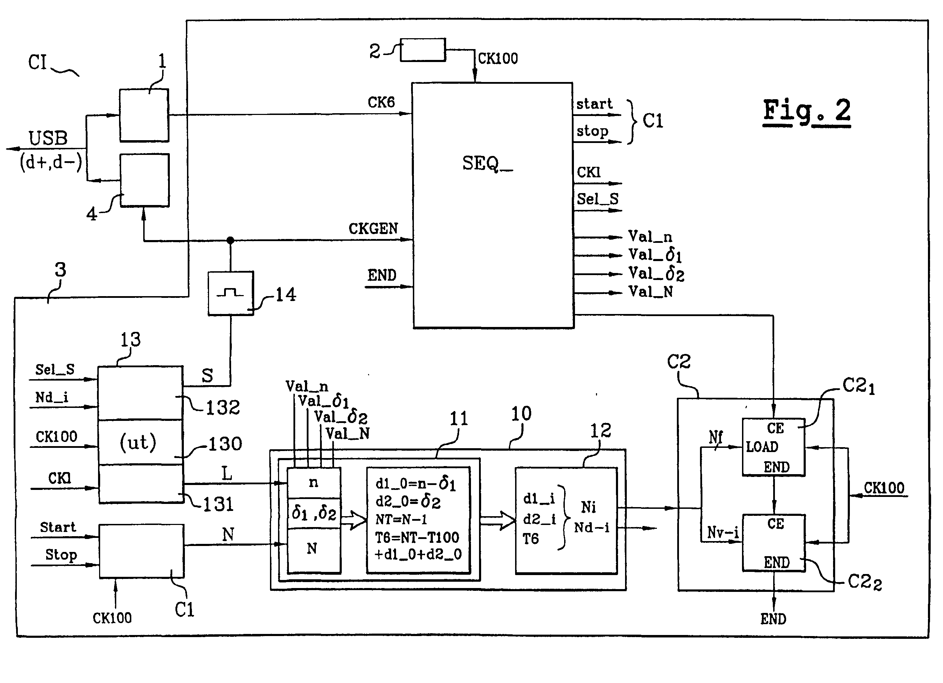

L'architecture générale du dispositif de génération selon l'invention dans un circuit intégré assurant des transactions sur un bus série de type USB est représentée sur la figure 2.

Le circuit intégré CI représenté sur cette figure comprend principalement un étage d'entrée 1 du bus série USB, un oscillateur 2, un dispositif 3 de régénération de l'horloge du bus et un étage de sortie 4 sur le bus de série USB auquel le signal d'horloge régénéré CKGEN est appliqué.

L'étage d'entrée 1 fournit en sortie un signal remis en forme, noté CK6, sur lequel on récupère à chaque transaction, d'abord des bits de synchronisation, puis une suite de 0 et de 1 correspondant à des données transmises.

L'oscillateur interne 2 a une structure adaptée pour fournir un signal d'horloge de fréquence stable CK100, utilisé comme signal d'horloge de référence.

Le dispositif de régénération 3 selon l'invention comprend un séquenceur SEQ, des moyens de mesure C1, 13, des moyens de calcul 10, et des moyens de régénération, C2, 13, 14.

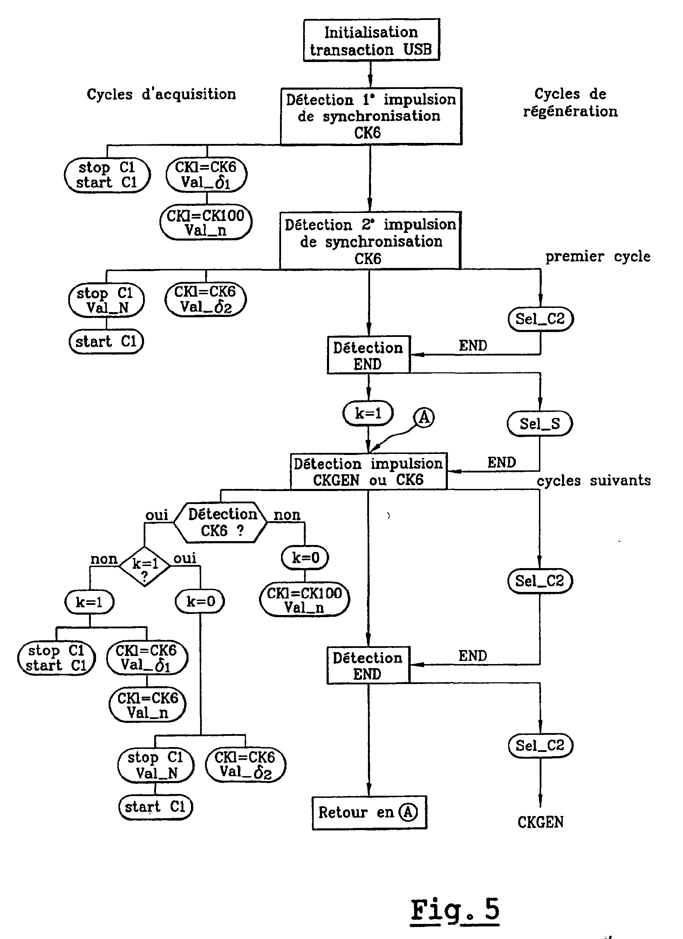

Le séquenceur SEQ est un circuit logique qui fournit tous les signaux de séquencement nécessaires au bon fonctionnement du dispositif. Un exemple de séquencement est représenté sur la figure 5.

Les moyens de calcul (non représentés) sont concrètement réalisés au moyen de compteurs, d'additionneurs, de machines d'état, et permettent d'effectuer tous les calculs nécessaires à la régénération, comme vu en relation avec la figure 1.b.

Ces moyens de calculs 10 ont deux fonctions distinctes : une première fonction 11 liée aux cycles d'acquisition des mesures de n, N, $\delta1$ et $\delta2$ et une deuxième fonction 12 liée la préparation de données d'initialisation Ni et Nd_i permettant l'émission d'une impulsion à chaque cycle de régénération.

Pour la première fonction 11, les moyens de calcul reçoivent des informations d'un circuit de mesure 13 de type vernier et d'un compteur C1. La lecture des résultats de la mesure des différents paramètres d'étalonnage, $\delta1$, $\delta2$, n et N, est activée par le séquenceur par des signaux de contrôle Val_$\delta1$, Val_$\delta2$, Val_n, Val_N appliqués aux moyens de calcul.

Le circuit de mesure 13, qui sera détaillé plus loin, comprend des moyens 130 de définition d'une unité de temps ut, des moyens 131 de mesure dans cette unité et des moyens 132 de génération d'un délai exprimé dans cette unité.

Les moyens de mesure 131 reçoivent en entrée un signal de commande CK1 contrôlé par le séquenceur, pour fournir aux moyens de calcul 10 les mesures $\delta1$ et $\delta2$, en imposant CK1=CK6 et la mesure de n en imposant CK1=CK100.

Le compteur C1 est contrôlé par le séquenceur pour fournir le nombre N de coups d'horloge de référence CK100 entre deux impulsions de synchronisation CK6. Il reçoit comme signal d'horloge de comptage, le signal d'horloge de référence interne CK100. Selon le principe de régénération de l'invention, il doit être déclenché par la première impulsion de synchronisation de CK6 et stoppé par la deuxième impulsion de synchronisation de CK6. En pratique, on prévoit de le stopper puis le redéclencher en le remettant à zéro à chaque impulsion, le séquenceur étant apte à déclencher la lecture de ce compteur C1 par les moyens de calcul 10 en leur appliquant un signal de validation Val_CI lorsque l'impulsion de CK6 courante est une deuxième impulsion au sens de l'invention.

Plus généralement, dans un exemple de séquencement (figure 5) dans lequel on veut ré-étalonner en cours de transaction les données de régénération, le séquenceur discrimine entre trois situations possibles. Lorsqu'il détecte une nouvelle impulsion CKGEN, s'il reçoit une impulsion CK6, il utilise cette dernière comme top de synchronisation, puis détermine quelles mesures lancer. Dans l'exemple représenté sur la figure 5, il utilise un indicateur k, qui lui indique si l'impulsion CK6 est à traiter comme une première ou comme une deuxième impulsion. Dans les deux cas, c'est à dire à chaque premier cycle et à chaque deuxième cycle, il stoppe puis redéclenche le compteur, ce qui s'écrit, dans la figue 5 : stop C1 ; start C1.

A chaque nouvelle impulsion de CK6 à traiter comme la première impulsion de synchronisation IS1, le séquenceur déclenche le premier cycle d'acquisition. Dans ce premier cycle d'acquisition, il lance une mesure de N (stop; start) il applique CK1=CK6, et active une commande Val_$\delta1$ pour lancer la lecture de $\delta1$; il applique CK1=CK100 et active une commande Val_n pour lancer la lecture de n.

A chaque nouvelle impulsion de CK6 à traiter comme la deuxième impulsion de synchronisation IS2, le séquenceur déclenche le deuxième cycle d'acquisition. Dans ce deuxième cycle d'acquisition, après avoir activé la commande stop par laquelle le compteur est stoppé et son contenu appliqué en sortie, il active la commande VAL_N pour lancer la lecture de N, puis il relance une nouvelle mesure de N (start) ; il applique CK1=CK6, et active une commande Val_$\delta2$ pour lancer la lecture de $\delta2$ ; il applique CK1=CK100.

A chaque impulsion de CKGEN, pour laquelle le séquenceur ne détecte pas concurremment une impulsion de CK6, le séquenceur déclenche un troisième cycle d'acquisition. Dans ce troisième cycle d'acquisition, il applique CK1=CK100 et active une commande Val_n pour lancer la lecture de n.

On notera qu'avec le séquencement décrit, si on reçoit l'impulsion de synchronisation IS3, cette impulsion est traitée comme la deuxième impulsion IS2 sur le plan des mesures.

D'autres séquencements sont bien sûr possibles.

A partir de ces données N, $\delta1$, $\delta2$ et n, la première fonction 11 des moyens de calcul élabore les données de départ, qui servent de base à la régénération, à savoir d1_0, d2_0, NT et T6.

La deuxième fonction de calcul 12 des moyens de calcul 10 reçoivent ces données de départ, à partir desquelles ils vont prédire la position de la prochaine impulsion du signal d'horloge régénéré, puis de la suivante.... A chaque fois que la première fonction élabore de nouvelles données de départ, elle fournit ces nouvelles données à la deuxième fonction.

Cette deuxième fonction 12 élabore pour le cycle de régénération en cours les données d'initialisation des moyens de décomptage de la période T6 calculée. Ces données d'initialisation sont le nombre Ni de coups d'horloge CK100 et le nombre Nd_i d'unités de temps ut à décompter avant d'émettre une impulsion sur le signal d'horloge régénéré CKGEN.

Le nombre Ni est appliqué dans l'exemple à un compteur C2 à déclenchement, utilisé en décompteur. Ce compteur reçoit comme signal d'horloge, le signal d'horloge de référence interne CK100. Il est déclenché à chaque top de synchronisation par un signal de déclenchement Sel_C2 émis par le séquenceur, entraînant le chargement de la valeur Ni présentée en entrée. Le passage à zéro du compteur entraîne l'activation d'un signal interne END.

En pratique, le compteur C2 est formé de deux compteurs, un premier $C2_1$ pour décompter une valeur Nf toujours fixe, et un deuxième $C2_2$ pour décompter une valeur variable Nvi. On a Ni = Nf + Nvi. De cette façon, pendant le décomptage de la partie fixe, on sait réaliser les différents cycles d'acquisition et prendre en compte les nouvelles mesures pour recalculer Ni et Nd_i dans le cycle de régénération en cours, et initialiser le deuxième compteur $C2_2$ avec la partie variable Nvi. Dans ce cas, le signal Sel C2 est appliqué sur le premier compteur, le signal $END_1$ du premier compteur déclenchant le deuxième compteur, qui fournit lui le signal END du compteur C2.

Ce signal END est appliqué en entrée du séquenceur, pour lui permettre d'activer les moyens 132 de génération de délai du circuit de mesure 13. Ces moyens 132 prennent alors en compte la nouvelle valeur Nd_i appliquée en entrée, pour activer une sortie S à l'expiration du délai Nd_i.ut correspondant suivant l'impulsion de CK100. Cette sortie S est appliquée en entrée d'un circuit 14 de génération d'une impulsion en sortie, sur le signal CKGEN d'horloge régénérée. Ce circuit 14 est calibré de manière appropriée, en fonction de l'application.

Dans une variante, on applique $Nd\_i \bmod_n$ en entrée des moyens de génération de délai 132 au lieu de Nd_i. On prévoit pour cela, dans la deuxième fonction de calcul, d'incrémenter Ni d'autant de fois que Nd_i contient n.

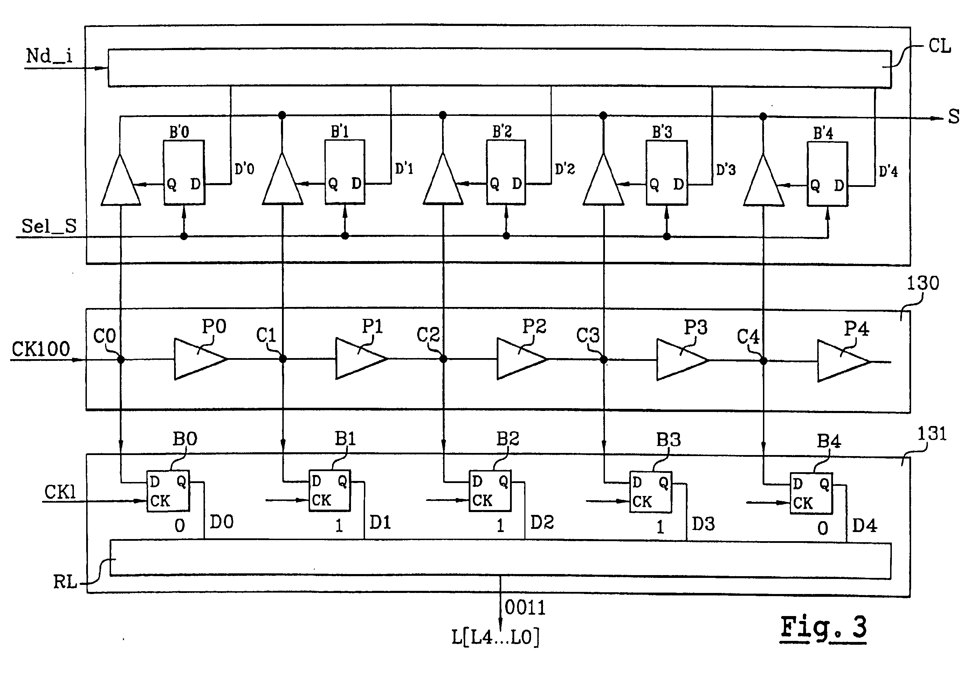

Le circuit de mesure 13 va maintenant être détaillé, en référence à la figure 3.

On a vu que ce circuit de mesure 13 comprend un circuit 130 de définition d'une unité de temps ; un circuit 131 de mesure en unités de temps qui fournit le résultat de la mesure sur une sortie L, appliquée aux moyens de calcul 10; et un circuit 132 de génération d'un signal S à l'expiration du délai Nd_i exprimé en unité de temps. Cette sortie S est appliquée en entrée d'un circuit 14 de génération d'une impulsion, qui délivre en sortie le signal d'horloge régénéré CKGEN.

Le circuit 130 de définition d'une unité de temps comprend une suite de circuits à retard ou portes P0, P1,... identiques, connectés en série. Le signal d'horloge de référence interne CK100 est appliqué en entrée de cette suite, éventuellement au travers d'un étage d'adaptation de phase non représenté.

Dans chaque porte, ce signal CK100 est retardé d'une unité de temps ut. En pratique, une porte consiste en deux inverseurs. De préférence, la structure de ces inverseurs est telle que l'on obtient le même retard ut dans chaque porte, de façon très précise.

A ce circuit de définition, sont connectés le circuit de mesure 131 et le circuit de génération de délai 132.

Le circuit de mesure 131 consiste principalement dans des bascules B0, ... B4 et un registre de lecture RL.

A chaque porte correspond ainsi une bascule dans le circuit de mesure. L'entrée d'une porte est appliquée en entrée de la bascule, alors que la sortie de la bascule est appliquée sur une entrée du registre de lecture RL. Ainsi, dans l'exemple, l'entrée C0 de la porte P0 est appliquée en entrée d'une bascule B0, dont la sortie est appliquée sur l'entrée de donnée D0 du registre de lecture RL.

Ces bascules du circuit de mesure sont dans l'exemple des bascules D. Elles reçoivent comme signal d'horloge, le signal CK1, fourni par le séquenceur et égal à CK100 pour la mesure de n et à CK6 pour la mesure de $\delta 1$ et $\delta 2$.

Le registre de lecture RL reçoit en entrée de données les sorties des bascules. Il fournit la donnée L correspondante en sortie vers les moyens de calcul 11.

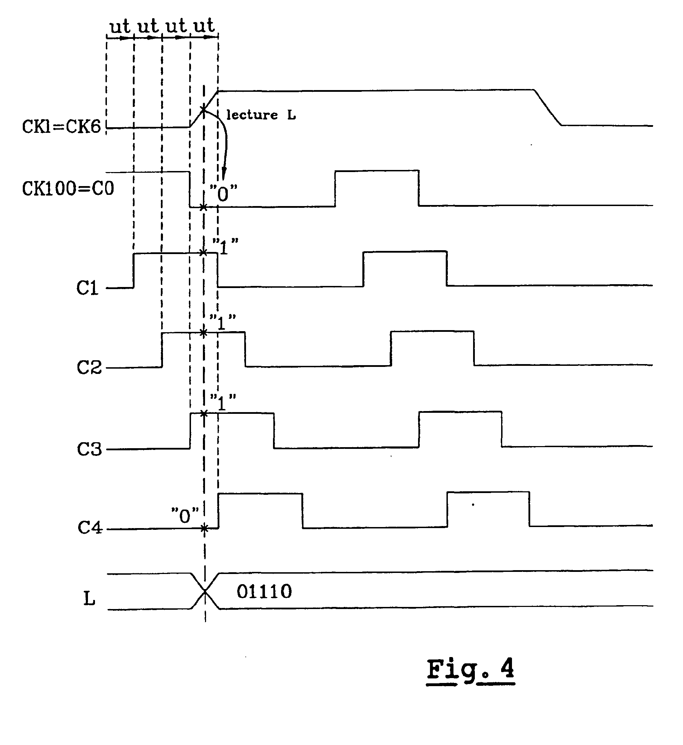

Le principe de mesure est expliqué en rapport avec la figure 4, sur laquelle on a représenté le signal CK100 aux différentes entrées C0, C1. Ce signal est décalé dans le temps. On suppose ici que l'on est en cycle d'apprentissage. On a donc CK1=CK6.

Ainsi, lorsque arrive l'impulsion CK6, les bascules mémorisent une information DATA, qui dans l'exemple vaut 01110, et qui permet d'identifier où se trouve à ce moment l'impulsion de CK100, ou plus exactement son front actif (front montant dans l'exemple). On peut déduire de cette information le nombre d'unités de temps ut qui sépare ce front de CK100 du front de CK6. Dans l'exemple, cela signifie que l'impulsion CK6 est arrivée entre la quatrième porte B3 et la cinquième porte B4. On peut ainsi déduire que CK6 est décalé de 4 unités de temps ut par rapport à CK100. A partir de la donnée DATA, on sait déduire le nombre d'unités de temps au moyen d'une logique qui n'est pas détaillée, mais que l'on considère incluse dans la fonction du registre de lecture RL sur la figure. Dans l'exemple, on obtient donc en sortie du circuit 131 L=00100 (soit 4).

Si CK1=CK100, on obtient le nombre d'unité de temps entre deux impulsions consécutives de CK100.

C'est ainsi que l'on peut mesurer les délais $\delta 1$, $\delta 2$ et n.

Les moyens 132 de génération d'un délai Nd.ut comprennent un ensemble de portes commandées PSO, PS1, ... et un circuit de commande de ces portes commandées. Ce circuit assure en pratique la sélection de l'entrée d'une porte du circuit de définition 130, pour l'appliquer en sortie S, en fonction de la donnée d'entrée Nd_i. En d'autres termes, ce circuit assure une fonction_ de multiplexage. On comprend que si l'on sélectionne l'entrée C2 de la porte B2, pour la connecter à la sortie S, on obtient sur cette sortie S le signal CK100 retardé de deux unités de temps. Ainsi, selon le principe de l'invention, si on revient à la figure 2, on émet une impulsion sur le signal S, 2 unités de temps après le dernier coup d'horloge CK100 décompté dans le compteur C2. Cette impulsion déclenche le générateur d'impulsion 14, qui fournit une impulsion calibrée, sur le signal CKGEN.

Chaque porte commandée du circuit 132 est en pratique connectée entre l'entrée d'une porte du circuit 130, et la sortie S du circuit 13.

Le circuit de commande de ces portes comprend dans l'exemple un circuit logique CL de type décodeur et un ensemble de bascules B'0, B'1, ..., Ces bascules du circuit 132 ont chacune leur entrée de donnée commandée par une sortie correspondante du circuit logique CL qui sélectionne parmi ces entrées de données, l'entrée à mettre à 1, et met toutes les autres entrées à 0, en fonction du nombre Nd_i d'unité de temps qui lui est appliqué. Dans un exemple, si on lui applique en entrée Nd_i=00011, ce circuit met les entrées des bascules B'0, B'1, B'2, B'4 à 0 et l'entrée de la bascule B'3 à 1. La sortie de chaque bascule contrôle la porte commandée associée. Ainsi, on délivre en sortie S, une impulsion retardée de Nd_i.Ut, soit trois ut dans l'exemple, par rapport à la dernière impulsion de CK100. Le déclenchement de ce circuit CL est contrôlé par le signal de validation Sel_S, activé par le séquenceur dès lors que le compteur C2 est passé à zéro (signal END).

Le circuit de définition et mesure 13 est en pratique dimensionné en fonction de l'application. Dans un exemple typique, il comprendra 8 étages de portes.

L'invention qui vient d'être décrite permet de régénérer en interne l'horloge du bus USB, à partir de seulement les deux premières impulsions de synchronisation. Dans le cas du bus USB, qui transmet six impulsions de synchronisation, on régénère l'horloge USB dès la deuxième impulsion, les autres impulsions de synchronisation ne servant que pour la mise à jour.

La réalisation pratique du dispositif avec une logique de séquencement adaptée dépend des options retenues, en ce qui concerne la mise à jour des mesures.

Avec un dispositif selon l'invention, on est en pratique capable de régénérer l'horloge du bus et ce avec une grande précision.

Ce dispositif est plus particulièrement applicable dans les circuits intégrés des supports portables type carte à puce, mais peut être utilisé plus généralement.

**Revendications**

1. Dispositif de régénération d'une horloge à partir d'au moins deux impulsions de synchronisation (IS1, IS2) transmises sur un bus série externe (USB), dans un circuit intégré (CI) comprenant un oscillateur interne (2) apte à fournir un signal d'horloge de référence (CK100), **caractérisé en ce qu'**il comprend des moyens de définition (130) d'une unité de temps (ut) et des moyens de mesure associés (131) pour fournir une mesure fine, dans ladite unité de temps, du retard ($\delta1$, $\delta2$) des deux impulsions de synchronisation chacune par rapport à une impulsion précédente du signal d'horloge de référence (CK100), le dispositif disposant d'une mesure (n) de la période d'horloge de référence dans ladite unité de temps et comprenant en outre des moyens de mesure (C1) du nombre (N) de coups d'horloge de référence entre les deux impulsions de synchronisation, lesdites mesures de retard ($\delta1$, $\delta2$), de la période horloge de référence (n) et du nombre de coups d'horloge (N) étant appliquées comme données de départ à des moyens de calcul (10) aptes à calculer la période correspondante (T6) et à initialiser des moyens de décomptage (C2, 132) activés à chaque cycle de régénération pour fournir en sortie une impulsion d'horloge régénérée (CKGEN).

2. Dispositif selon la revendication 1, **caractérisé en ce que** les moyens de définition comprennent une suite de circuits à retard (P0, P1,...) à l'entrée de laquelle est appliqué le signal d'horloge de référence (CK100), le retard appliqué par chaque circuit étant égal à une unité de temps (ut).

3. Dispositif selon la revendication 2, **caractérisé en ce que** les moyens de mesure (131) comprennent une bascule (B0) par circuit à retard (P0) et un registre de lecture (RL), l'entrée de chaque circuit à retard étant appliquée en entrée (D) de la bascule associée, dont la sortie (Q) est appliquée sur une entrée correspondante du registre de lecture.

4. Dispositif selon la revendication 3, **caractérisé en ce que** les impulsions (CK6) reçues du bus série sont appliquées comme horloge de séquencement (CK1) desdites bascules pour obtenir les mesures des retards ($\delta1$, $\delta2$) en sortie

du registre de lecture (RL).

5. Dispositif selon la revendication 3 ou 4, **caractérisé en ce que** la mesure (n) de la période du signal d'horloge de référence (CK100) est fournie par les moyens (13) de définition (130) et mesure (131) dans l'unité de temps, le signal d'horloge de référence (CK100) étant appliqué comme horloge de séquencement (CKI) des bascules des moyens de mesure.

6. Dispositif de régénération selon l'une des revendications précédentes, **caractérisé en ce que** chaque cycle de régénération est déclenché par un top de synchronisation à partir duquel les moyens de décomptage sont activés, le top de synchronisation du premier cycle de régénération étant donné par la deuxième impulsion de synchronisation (IS2), et le top de synchronisation de chaque cycle de régénération suivant étant donné par l'impulsion d'horloge régénérée (CKGEN) au cycle précédent ou par une impulsion (IS3) reçue sur le bus série concurremment à cette impulsion d'horloge régénérée.

7. Dispositif selon l'une quelconque des revendications 1 à 6, **caractérisé en ce que** les moyens de décomptage sont initialisés à chaque cycle de régénération par une première donnée d'initialisation correspondant à un nombre (Ni) de coups d'horloge de référence (CK100) à décompter et une deuxième donnée d'initialisation (Nd_i) correspondant à un nombre d'unité de temps (ut) à décompter.

8. Dispositif selon la revendication 7, **caractérisé en ce que** les données d'initialisation du premier cycle de régénération sont élaborées par les moyens de calcul (10) à partir des données de départ.

9. Dispositif selon la revendication 8, **caractérisé en ce que** les données d'initialisation de chaque cycle de régénération suivant sont élaborées par les moyens de calcul (10) à partir des données d'initialisation du cycle de régénération précédent et/ou à partir d'au moins une donnée de départ mise à jour.

10. Dispositif selon la revendication 9, **caractérisé en ce que** les données de départ sont mises à jour au long d'une transaction initiée avec le bus série.

11. Dispositif selon l'une quelconque des revendications 7 à 10, **caractérisé en ce que** la première donnée d'initialisation (Ni) est appliquée à un compteur (C2) à déclenchement utilisé en décompteur, recevant comme horloge de séquencement, le signal d'horloge de référence (CK100).

12. Dispositif selon la revendication 11, **caractérisé en ce que** le dit compteur comprend un premier compteur ($C2_1$) d'un nombre fixe (Nf) suivi en série d'un deuxième compteur ($C2_2$) d'un nombre variable (Nvi) fonction de la donnée d'initialisation correspondante (Ni), en sorte que les moyens de calcul élaborent les données d'initialisation pour le cycle de régénération en cours pendant le décomptage du nombre fixe par le premier compteur.

13. Dispositif selon l'une quelconque des revendications 6 à 12 en combinaison avec la revendication 2, **caractérisé en ce que** les moyens de décomptage comprennent des moyens (132) pour transmettre en sortie (S) une impulsion d'horloge de référence retardée d'un nombre d'unités de délai correspondant à la deuxième donnée d'initialisation (Nd_i), ces moyens pour transmettre comprenant des moyens pour appliquer sur la sortie (S), l'entrée d'un circuit à retard parmi les circuits de retard des moyens de définition (130).

14. Dispositif selon la revendication 13, **caractérisé en ce que** ces moyens pour appliquer comprennent une porte commandée (P'0) par circuit à retard (P0) et des moyens de commande de ces portes commandées pour qu'une seule soit passante, en fonction de la deuxième donnée d'initialisation (Nd_i).

15. Dispositif selon la revendication 14, **caractérisé en ce qu'**il comprend un générateur d'une impulsion calibrée commandé par la sortie S des moyens pour transmettre (132), ce générateur délivrant en sortie le signal d'horloge régénéré CKGEN.

16. Dispositif selon l'une quelconque des revendications précédentes, **caractérisé en ce que** le bus série externe est de type USB.

17. Circuit intégré comprenant un dispositif selon l'une quelconque des revendications précédentes.

18. Support portable du type carte à puce comprenant un circuit intégré selon la revendication 17.

**Claims**

1. A device for the regeneration of a clock signal from at least two synchronization pulses (IS1, IS2) transmitted on an external serial bus (USB) in an integrated circuit (CI) comprising an internal oscillator (2) capable of giving a reference clock signal (CK100), wherein the device comprises means (130) for the defining of a time unit (ut) and associated measurement means (131) to give a fine measurement, in said time unit, of the delay (δ1, δ2) of two synchronization pulses each with respect to a preceding pulse of the reference clock signal (CK100), the device having available a measurement (n) of the reference clock signal period in said time unit and furthermore comprising means (C1) to measure the number (N) of reference clock signal strokes between the two synchronization pulses, said measurements (δ1, δ2) of delay, of the reference clock signal period (n) and of the number (N) of clock signal strokes being applied as starting data elements to computation means (10) capable of computing the corresponding period (T6) and capable of initializing countdown means (C2, 132) activated at each regeneration cycle to give a regenerated clock signal pulse (CKGEN) at output.

2. A device according to claim 1, wherein the definition means comprise a sequence of delay circuits (P0, P1, ...) to whose input the reference clock signal (CK100) is applied, the delay applied by each circuit being equal to a time unit (ut).

3. A device according to claim 2, wherein the measurement means (131) comprise one flip-flop circuit (BO) per delay circuit (P0) and one read register (RL), the input of each delay circuit being applied to the input (D) of the associated flip-flop circuit, the output (Q) of this flip-flop circuit being applied to a corresponding input of the read register.

4. A device according to claim 3, wherein the pulses (CK6) received from the serial bus are applied as a sequencing clock (CK1) of said flip-flop circuits to obtain the measurements of the delays (δ1, δ2) at output of the read register (RL).

5. A device according to claim 3 of 4, wherein the measurement (n) of the period of the reference clock signal (CK100) is given by the means (13) of definition (130) and measurement (131) in the time unit, the reference clock signal (CK100) being applied as a sequencing clock (CK1) for the flip-flop circuits of the measurement means.

6. A regeneration device according to one of the above claims, wherein each regeneration cycle is activated by a synchronization beep from which the countdown means are activated, the synchronization beep of the first regeneration cycle been given by the second synchronization pulse (IS2) and the synchronization beep of each following regeneration cycle being given by the regenerated clock pulse (CKGEN) at the preceding cycle or by a pulse (IS3) received on the serial bus concurrently with this regenerated clock pulse.

7. A device according to any of the claims 1 to 6, wherein the countdown means are initialized at each regeneration cycle by a first initialization data element corresponding to a number (Ni) of reference clock strokes (CK100) to be counted down and a second initialization data element (Nd_i) corresponding to a time unit (ut)° number to be counted down.

8. A device according to claim 7, wherein the initialization data elements of the first regeneration cycle are prepared by the computation means (10) from the starting data elements.

9. A device according to claim 8, wherein the initialization data elements of each following regeneration cycle are prepared by the computation means (10) from data elements for the initialization of the previous regeneration cycle and/or from at least one updated starting data element.

10. A device according to claim 9, wherein the starting data elements are updated during a transaction initiated with the serial bus.

11. A device according to any of the claims 7 to 10, wherein the first initialization data element (Ni) is applied to a triggered counter (C2) used as a countdown unit, receiving the reference clock signal (CK100) as a sequencing clock signal.

12. A device according to claim 11, wherein said counter comprises a first counter (C2$_1$) of a fixed number (Nf) followed, in series, by a second counter (C2$_2$) of a number (Nvi) that is variable as a function of the corresponding initialization data element (Ni), so that the computation means prepare the initialization data elements for the regeneration cycle in progress during the countdown of the number fixed by the first counter.

**13.** A device according to any of the claims 6 to 12 in combination with claim 2, wherein the countdown means comprise means (132) for the transmission, at output(S), of a reference clock pulse delayed by a number of time units corresponding to the second initialization data element (Nd_i), these means for transmission comprising means for the application, to the output (S), of the input of a delay circuit among the delay circuits of the definition means (130).

**14.** A device according to claim 13, wherein these means of application comprise a gate (P'0) controlled by delay circuit (P0) and means to control these controlled gates so that only one is on as a function of the second initialization data element (Nd_i).

**15.** A device according to claim 14, comprising a calibrated pulse generator controlled by the output (S) of the means (132) for transmission, this generator delivering the regenerated clock signal (CKGEN) at output.

**16.** A device according to any of the above claims, wherein the external serial bus is an USB type of bus.

**17.** An integrated circuit comprising a device according to any of the above claims.

**18.** A portable smart-card type of carrier comprising an integrated circuit according to claim 17.

**Patentansprüche**

**1.** Vorrichtung zur Wiedergewinnung eines Takts ausgehend von zumindest zwei Synchronisationsimpulsen (IS1, IS2), die über einen externen seriellen Bus (USB) übertragen werden, in einer integrierten Schaltung (IS), umfassend einen internen Oszillator (2), der dazu eingerichtet ist, ein Referenztaktsignal (CK100) zu liefern, **dadurch gekennzeichnet, daß** sie Definitionsmittel (130) zur Definition einer Zeiteinheit (ZE) und zugeordnete Messungsmittel (131) umfaßt, um eine Feinmessung der Verzögerung ($\delta$1, $\delta$2) der beiden Synchronisationsimpulse, jeweils im Verhältnis zu einem vorhergehenden Impuls des Referenztaktsignals (CK100), in der Zeiteinheit zu liefern, wobei die Vorrichtung eine Messung (n) der Referenztaktperiode in der Zeiteinheit ausführt und darüber hinaus Mittel (C1) zur Messung der Anzahl (N) von Referenztaktschlägen zwischen den beiden Synchronisationsimpulsen umfaßt, wobei die Verzögerungsmessungen ($\delta$1, $\delta$2) der Referenztaktperiode (n) und der Anzahl von Taktschlägen (N) als Ausgangsdaten für Berechnungsmittel (10) angewandt werden, die dazu eingerichtet sind, die entsprechende Periode (T6) zu berechnen und Rückwärtszählmittel (C2, 132) zu initialisieren, die bei jedem Wiedergewinnungszyklus aktiviert werden, um am Ausgang einen wiedergewonnenen Taktimpuls (CKGEN) zu liefern.

**2.** Vorrichtung nach Anspruch 1, **dadurch gekennzeichnet, daß** die Definitionsmittel eine Folge von Verzögerungsschaltungen (P0, P1...) umfassen, an deren Eingang ein Referenztaktsignal (CK100) angelegt wird, wobei die durch jede Schaltung angewandte Verzögerung gleich einer Zeiteinheit (ZE) ist.

**3.** Vorrichtung nach Anspruch 2, **dadurch gekennzeichnet, daß** die Messungsmittel eine Kippschaltung (KS) mit einer Verzögerungsschaltung (P0) und ein Leseregister (LR) umfassen, wobei der Eingang jeder Verzögerungsschaltung an den Eingang (D) der zugeordneten Kippschaltung angelegt wird, deren Ausgang (Q) an einen entsprechenden Eingang des Leseregisters angelegt wird.

**4.** Vorrichtung nach Anspruch 3, **dadurch gekennzeichnet, daß** die vom seriellen Bus erhaltenen Impulse (CK6) als Sequenztakt (CK1) der Kippschaltungen angelegt werden, um die Messungen der Verzögerungen ($\delta$1, $\delta$2) am Ausgang des Leseregisters (LR) zu erhalten.

**5.** Vorrichtung nach Anspruch 3 oder 4, **dadurch gekennzeichnet, daß** die Messung (n) der Periode des Referenztaktsignals (CK100) durch die Mittel (13) zur Definition (130) und Meßmittel (131) in der Zeiteinheit geliefert wird, wobei das Referenztaktsignal (CK100) als Sequenztakt (CK1) der Kippschaltungen der Meßmittel angelegt wird.

**6.** Vorrichtung zur Wiedergewinnung gemäß einem der vorhergehenden Ansprüche, **dadurch gekennzeichnet, daß** jeder Wiedergewinnungszyklus durch ein Synchronisationszeitzeichen ausgelöst wird, ausgehend von welchem die Rückwärtszählmittel aktiviert werden, wobei das Synchronisationszeitzeichen des ersten Wiedergewinnungszyklus durch den zweiten Synchronisationsimpuls (IS2) gegeben ist und das Synchronisationszeitzeichen jedes folgenden Wiedergewinnungszyklus durch den im vorhergehenden Zyklus wiedergewonnenen Taktimpuls (CKGEN) oder durch einen gleichzeitig mit diesem wiedergewonnenen Taktimpuls über den seriellen Bus empfangenen Impuls gegeben ist.

**7.** Vorrichtung nach einem der Ansprüche 1 bis 6, **dadurch gekennzeichnet, daß** die Rückwärtszählmittel bei jedem Wiedergewinnungszyklus durch ein erstes Initialisierungsdatum, das einer Anzahl (Ni) von rückwärtszuzählenden Referenztaktschlägen (CK100) entspricht, und ein zweites Initialisierungsdatum (Nd_i) initialisiert werden, das einer rückwärtszuzählenden Anzahl von Zeiteinheiten (ZE) entspricht.

**8.** Vorrichtung nach Anspruch 7, **dadurch gekennzeichnet, daß** die Initialisierungsdaten des ersten Wiedergewinnungszyklus von den Berechnungsmitteln (10) ausgehend von Ausgangsdaten erstellt werden.

**9.** Vorrichtung nach Anspruch 8, **dadurch gekennzeichnet, daß** die Initialisierungsdaten jedes folgenden Wiedergewinnungszyklus durch die Berechnungsmittel (10) ausgehend von den Initialisierungsdaten des vorhergehenden Wiedergewinnungszyklus und/oder ausgehend von zumindest einem aktualisierten Ausgangsdatum erstellt werden.

**10.** Vorrichtung nach Anspruch 9, **dadurch gekennzeichnet, daß** die Ausgangsdaten über eine mit dem seriellen Bus initiierte Übertragung aktualisiert sind.

**11.** Vorrichtung nach einem der Ansprüche 7 bis 10, **dadurch gekennzeichnet, daß** das erste Initialisierungsdatum (Ni) an einen im Rückwärtszähler verwendeten Triggerzähler (C2) angelegt wird, der als Sequenztakt das Referenztaktsignal (CK100) empfängt.

**12.** Vorrichtung nach Anspruch 11, **dadurch gekennzeichnet, daß** der Zähler einen ersten Zähler ($C2_1$) einer festen Zahl (Nf) gefolgt in Reihe von einem zweiten Zähler ($C2_2$) einer variablen Zahl ($N_{vi}$) in Abhängigkeit vom entsprechenden Initialisierungsdatum (Ni) umfaßt, so daß die Rechenmittel die Initialisierungsdaten für den Wiedergewinnungszyklus laufend während des Rückwärtszählens der festen Zahl durch den ersten Zähler erstellen.

**13.** Vorrichtung nach einem der Ansprüche 6 bis 12 in Kombination mit Anspruch 2, **dadurch gekennzeichnet, daß** die Rückwärtszählmittel Übertragungsmittel (132) zur Übertragung als Ausgang (S) eines Referenztaktimpulses umfassen, der um eine dem zweiten Initialisierungsdatum (Nd_i) entsprechende Anzahl von Verzögerungseinheiten verzögert ist, wobei diese Übertragungsmittel Mittel umfassen, um am Ausgang (S) den Eingang einer Verzögerungsschaltung einer der Verzögerungsschaltungen der Definitionsmittel (130) anzulegen.

**14.** Vorrichtung nach Anspruch 13, **dadurch gekennzeichnet, daß** diese Mittel zum Anlegen einen durch eine Verzögerungsschaltung (P0) gesteuerten Eingang (P'0) und Steuerungsmittel dieser Eingänge umfassen, die so gesteuert sind, daß in Abhängigkeit vom zweiten Initialisierungsdatum (Nd_i) ein einziger durchgeschaltet ist.

**15.** Vorrichtung nach Anspruch 14, **dadurch gekennzeichnet, daß** sie einen kalibrierten Impulsgenerator umfaßt, der durch den Ausgang (S) der Übertragungsmittel (132) gesteuert ist, wobei dieser Generator am Ausgang das wiedergewonnene Taktsignal (CKGEN) liefert.

**16.** Vorrichtung nach einem der vorhergehenden Ansprüche, **dadurch gekennzeichnet, daß** der externe serielle Bus von der USB-Bauart ist.

**17.** Integrierte Schaltung, die eine Vorrichtung nach einem der vorhergehenden Ansprüche umfaßt.

**18.** Tragbarer Träger der Bauart einer Chipkarte, umfassend eine integrierte Schaltung nach Anspruch 17.

Détection début
de transaction

USB — IS1 — IS2 — IS3 — IS4 — IS5 — IS6 — DATA

**Fig. 1a**

$\delta_1 = 3ut$

$\delta_2 = d2-0 = 6ut$

$n-d2\_0 = 4ut$

$(n=10)$

CK6 — IS1 — IS2 — IS3

$d1\_0 = 7ut$

CK100 — Ir1 Ir2 Ir3 Ir4 Ir5 Ir6 Ir7 Ir8 Ir9

C1 — 1 — 2 — 3 — 1 — 2 — 3

$N=3 \Rightarrow NT=2$

T6 — $T6 = 2T100+13ut$ — T6

Nd_i — $Nd\_0 = 13ut-4ut = 9ut$ — Nd_1

C2 — 2 — 1 — 0 — 2 — 1

CKGEN — 9ut — IG1

**Fig. 1b**

**Fig. 2**

CI

USB (d+,d−)

1

4

2 → CK100

CK6

SEQ_

start
stop } C1

CKl
Sel_S

CKGEN

END

Val_n
Val_δ1
Val_δ2
Val_N

3

14

13

Sel_S
Nd_i

CK100

CKl

(ut)

132
130
131

S

L

Start
Stop

N

C1
CK100

Val_n
Val_δ1
Val_δ2
Val_N

11

10

12

n

δ1, δ2

N

d1_0 = n − δ1
d2_0 = δ2
NT = N−1
T6 = NT−T100
+d1_0+d2_0

d1_i
d2_i
T6

Ni
Nd−i

C2

C2₁

Nf

CE
LOAD
END

CK100

Nv−i

CE
END

C2₂

END

EP 1 118 943 B1

14

**Fig. 3**

Fig. 4

16

Initialisation
transaction USB

Cycles d'acquisition

Détection 1° impulsion
de synchronisation
CK6

Cycles de
régénération

stop C1
start C1

CKl=CK6
Val_$\delta_1$

CKl=CK100
Val_n

Détection 2° impulsion
de synchronisation
CK6

premier cycle

stop C1
Val_N

CKl=CK6
Val_$\delta_2$

Sel_C2

start C1

Détection
END

END

k=1 (A)

Sel_S

Détection impulsion
CKGEN ou CK6

END

cycles suivants

oui Détection
CK6 ? non

non k=1
? oui

k=0

Sel_C2

k=1 k=0

CKl=CK100
Val_n

stop C1
start C1

CKl=CK6
Val_$\delta_1$

CKl=CK6
Val_n

Détection
END

END

stop C1
Val_N

CKl=CK6
Val_$\delta_2$

Sel_C2

start C1

Retour en (A)

CKGEN

## Fig. 5